# EUROPÄISCHE PATENTSCHRIFT

(11) **EP 0 721 475 B1**
(45) Veröffentlichungstag und Bekanntmachung des Hinweises auf die Patenterteilung: **23.04.1997**
(21) Anmeldenummer: 94927642.2
(22) Anmeldetag: 23.09.1994
(51) Int. Cl.: C08F 210/02

(54) **COPOLYMERISATE AUF ETHYLENBASIS UND IHRE VERWENDUNG ALS FLIESSVERBESSERER IN ERDÖLMITTELDESTILLATEN**
ETHYLENE-BASED COPOLYMERS AND THEIR USE AS VISCOSITY IMPROVERS IN PETROLEUM DISTILLATES
COPOLYMERISATS A BASE D'ETHYLENE ET LEUR UTILISATION COMME AGENTS AMELIORANT LA VISCOSITE DE DISTILLATS DE PETROLE

(30) Priorität: 02.10.1993 DE 4333680; 06.12.1993 DE 4341528; 08.12.1993 DE 4341765
(43) Veröffentlichungstag der Anmeldung: 17.07.1996
(73) Patentinhaber: BASF AKTIENGESELLSCHAFT, 67056 Ludwigshafen (DE)
(72) Erfinder: MÜLLER, Hans-Joachim, D-67269 Grünstadt (DE); WENDEROTH, Bernd, D-69488 Birkenau (DE); BERGER, Albin, D-67273 Weisenheim (DE); LITTMANN, Dieter, D-68167 Mannheim (DE); KLIMESCH, Roger, D-64665 Alsbach (DE); OPPENLÄNDER, Knut, D-67061 Ludwigshafen (DE); MARCZINKE, Bernd, Lothar, D-67346 Speyer (DE); RÜHL, Thomas, D-67227 Frankenthal (DE); HEIDER, Marc, D-67433 Neustadt (DE)
(86) Internationale Anmeldenummer: EP9403179
(87) Internationale Veröffentlichungsnummer: WO9509877

(56) Entgegenhaltungen:
- EP-A- 0 276 111
- GB-A- 991 568
- US-A- 3 627 838
- PATENT ABSTRACTS OF JAPAN vol. 9, no. 309 (C-318) (2032) 5. Dezember 1985 & JP,A,60 147 412 (SUMITOMO KAGAKU KOGYO K.K.) 3. August 1985

## Beschreibung

Die vorliegende Erfindung betrifft neue Copolymerisate auf Ethylenbasis, die Verwendung dieser sowie an sich bekannter Copolymerisate als Fließverbesserer in Erdölmitteldestillaten und weiterhin Erdölmitteldestillate, die diese Copolymerisate enthalten.

Mitteldestillate wie Gasöle, Dieselöle oder Heizöle, die durch Destillation aus Erdölen gewonnen werden, haben je nach Herkunft des Rohöls unterschiedliche Gehalte an Paraffinen. Bei tieferen Temperaturen kommt es zur Ausscheidung fester Paraffine (Trübungspunkt oder Cloud Point, CP). Bei weiterer Abkühlung bilden die plättchenförmigen n-Paraffinkristalle eine "Kartenhausstruktur" und das Mitteldestillat stockt, obwohl der überwiegende Teil des Mitteldestillats noch flüssig ist. Durch die ausgefallenen n-Paraffine im Temperaturbereich zwischen Trübungspunkt und Stockpunkt (Pour Point) wird die Fließfähigkeit der Erdöldestillat-Kraftstoffe erheblich beeinträchtigt. Die Paraffine verstopfen Filter und verursachen ungleichmäßige oder völlig unterbrochene Kraftstoffzufuhr zu den Verbrennungsaggregaten. Ähnliche Störungen treten bei Heizölen auf.

Es ist seit langem bekannt, daß durch geeignete Zusätze das Kristallwachstum der Paraffine in den Erdölmitteldestillat-Brenn- und Kraftstoffen modifiziert werden kann. Gut wirksame Additive verhindern einerseits, daß Mitteldestillate derartige Kartenhaus-Strukturen ausbilden und bei Temperaturen wenige Grad Celsius unterhalb der Temperatur, bei welcher die ersten Paraffinkristalle auskristallisieren, bereits fest werden und andererseits feine, gut kristallisierte, separate Paraffinkristalle bilden, welche Filter in Kraftfahrzeugen und Heizungsanlagen passieren oder zumindest einen für den flüssigen Teil der Mitteldestillate durchlässigen Filterkuchen bilden, so daß ein störungsfreier Betrieb sichergestellt sind.

Als Fließverbesserer werden seit langem Ethylen-Vinylcarboxylat-Copolymere eingesetzt, wie sie z.B. aus der US-A 3 048 479 und US-A 3 627 838 bekannt sind.

Ein Nachteil dieser Additive beruht darin, daß die ausgefallenen Paraffinkristalle aufgrund ihrer gegenüber dem flüssigen Teil höheren Dichte dazu neigen, sich beim Lagern mehr und mehr am Boden des Behälters abzusetzen. Dadurch bildet sich im oberen Behälterteil eine homogene paraffinarme Phase und am Boden eine zweiphasige paraffinreiche Schicht. Da sowohl in Fahrzeugtanks als auch in Lager- oder Liefertanks der Mineralölhändler der Abzug des Mitteldestillates meist wenig oberhalb des Behälterbodens erfolgt, besteht die Gefahr, daß die hohe Konzentration an festen Paraffinen zu Verstopfungen von Filtern und Dosiereinrichtungen führt. Diese Gefahr wird um so größer, je weiter die Lagertemperatur die Ausscheidungstemperatur der Paraffine unterschreitet, da die ausgeschiedene Paraffinmenge eine Funktion der Temperatur darstellt und mit sinkender Temperatur ansteigt.

Die JP-A 83/80386 lehrt Fließverbesserer aus Ethylen, Vinylacetat und N-Vinyl-2-Pyrrolidon, welche jedoch in der Praxis nicht in allen Fällen zu befriedigenden Ergebnissen führen, da sich die zu behandelnden Erdölfraktionen je nach ihrer Herkunft in der Zusammensetzung stark unterscheiden. Nach der EP-A 405 270 kann die Wirkung der in der japanischen Patentanmeldung offenbarten Terpolymerisate durch Mischen mit einem Ethylen-Vinylacetat-Copolymerisat verbessert werden, andererseits erfordert der Zusatz mehrerer Polymerisate zu den Erdölmitteldestillaten einen erhöhten technischen Aufwand.

Aus der US-A 2 787 459 sind Copolymerisate aus Monomeren, die ein basisches Stickstoffatom tragen wie Aminoalkylacrylate, und solchen Monomeren, die keine Aminogruppe, aber einen Kohlenwasserstoffrest mit 8 bis 18 C-Atomen tragen, bekannt. Sie dienen zur Dispergierung von Schlamm, wie er aus Brennstoffölen ausfallen kann.

Die EP-A 340 975 beschreibt Copolymerisate aus Ethylen und Aminoalkylacrylaten, die bis zu 20 Gew.-% Vinylacetat enthalten können und ein mittleres Molekulargewicht (Zahlenmittel) von 5000 bis 50 000 aufweisen. Die Copolymerisate finden Verwendung zur Abreicherung von Metallionen in wäßriger Lösung.

Es bestand die Aufgabe, Copolymerisate zur Verfügung zu stellen, die die Fließfähigkeit von Erdölmitteldestillaten bei tiefer Temperatur gewährleisten und die eine solche Dispergierwirkung haben, daß ein Absetzen ausgeschiedener Paraffine verzögert oder verhindert wird. Die Fließverbesserer sollen ihre Wirkung unabhängig von der Zusammensetzung der Erdölmitteldestillate entfalten.

Demgemäß wurden Copolymerisate auf Ethylenbasis gefunden, die aus
a) 50 bis 94 Gew.-% Ethylen,
b) 3 bis 30 Gew.-% eines oder mehrerer Vinylester von C₂-C₆-Monocarbonsäuren,
c) 3 bis 20 Gew.-% eines oder mehrerer Aminoalkylenacrylate der allgemeinen Formel I 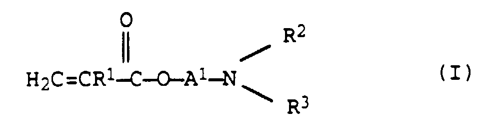 in der R¹ für Wasserstoff oder Methyl steht, die Reste R² und R³ gleich oder verschieden sein können und für Wasserstoff oder einen C₁-C₆-Alkylrest stehen und A¹ für einen geradkettigen oder verzweigten C₂-C₁₀-Alkylenrest steht, und
d) 0 bis 10 Gew.-% eines oder mehrerer Monomeren, die mit den Monomeren a) bis c) copolymerisierbar sind,
wobei solche Copolymerisate ausgeschlossen sind, in denen Monomer b) Vinylacetat ist und die ein mittleres Molekulargewicht (Zahlenmittel) von 5000 bis 50000 haben, oder aus
a') 50 bis 95,5 Gew.-% Ethylen,
b') 4 bis 30 Gew.-% eines oder mehrerer Vinylester von C₂-C₆-Monocarbonsäuren,
c') 0,5 bis 20 Gew.-% eines oder mehrerer Vinylimidazole der allgemeinen Formel II 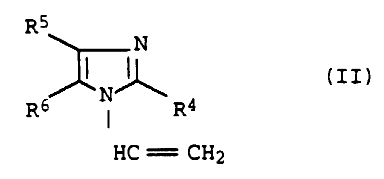 in der die Reste R⁴, R⁵ und R⁶ gleich oder verschieden sein können und für Wasserstoff oder einen C1-C6-Alkylrest stehen, oder
   0,5 bis 20 Gew.-% eines oder mehrerer Aminoalkylvinylether der allgemeinen Formel III

   R⁷R⁸N-A²-O-CR⁹=CR¹⁰R¹¹ (III)

   in der die Substituenten folgende Bedeutung haben:
   - R⁷, R⁸: C₁-C₆-Alkyl
   - R⁹, R¹⁰, R¹¹: Wasserstoff oder C₁-C₆-Alkyl
   - A²: C₂-C₆-Alkylen, und
d') 0 bis 10 Gew.-% eines oder mehrerer Monomeren, die mit den Monomeren a') bis c') copolymerisierbar sind,
aufgebaut sind.

Das obengenannte Zahlenmittel wird über die Messung der Viskosität bestimmt (s. EP-A 340 975).

Weiterhin wurde die Verwendung der genannten Copolymerisate als Zusatz für Erdölmitteldestillate gefunden sowie Erdölmitteldestillate, die diese Copolymerisate enthalten.

Die erfindungsgemäßen Copolymerisate haben in der Regel ein mittleres Molekulargewicht (Gewichtsmittel) von 300 bis 8000, wobei im Hinblick auf ihre Verwendung als Fließverbesserer solche mit einem Molekulargewicht von 500 bis 5000 bevorzugt sind. Besonders bevorzugt sind Copolymerisate mit einem Molekulargewicht von 1000 bis 3000. Die Bestimmung des Molekulargewichts erfolgt durch Gel-Permeations-Chromatographie. Die erfindungsgemäßen Copolymerisate weisen im allgemeinen eine nach DIN 53 019 bei 120°C bestimmte Viskosität von 100 bis 2000, bevorzugt 250 bis 1000 mm²/s auf.

Die Copolymerisate sind aus mindestens drei Monomeren aufgebaut:
a) Der Anteil an Ethylen beträgt bei Aminoalkylenacrylaten I als Monomeren c) vorzugsweise 50 bis 92 Gew.-%, insbesondere 65 bis 87 Gew.-%, bzw.
a') der Anteil an Ethylen beträgt bei Vinylimidazolen II oder Aminoalkylvinylethern III als Monomeren c') vorzugsweise 65 bis 94 Gew.-%.
b) Als Komponente b) kommen bevorzugt Vinylacetat und Vinylpropionat oder deren Mischungen in Betracht, oder aber auch Verbindungen wie Vinylbutyrat. Vorzugsweise beträgt die Menge an Monomer b) bei Amonoalkylenacrylaten I als Monomeren c) 5 bis 30 Gew.-%, insbesondere 10 bis 23 Gew.-%, bzw. bei Vinylimidazolen II oder Aminoalkylvinylethern III als Monomeren c') 4 bis 23 Gew.-%.
c) Monomer c) der allgemeinen Formel I umfaßt Alkylaminoacrylate bzw. -methacrylate. Als Alkylrest A¹ sind Ethylen, n-Propylen, n-Butylen, Dimethylethylen und sec.-Butylen zu nennen.
   Die Reste R² und R³ können z.B. für Wasserstoff, Methyl, Ethyl, n-Propyl, iso-Propyl und n-Butyl stehen, wovon Methyl bevorzugt wird. Als Monomer c) kommen z.B. Aminoethylacrylat, Amino-n-butylacrylat, N-Methylaminoethylacrylat, N,N-Di-n-butylamino-n-propyl-acrylat sowie die entsprechenden Methacrylate in Betracht, wobei Dimethylaminoethylacrylat und Dimethylaminoethylmethacrylat bevorzugt sind.
   Die Monomeren sind im Handel erhältlich oder nach bekannten Methoden herstellbar, beispielsweise durch Umesterung von Acrylsäureestern mit Aminoalkoholen in Gegenwart eines Titankatalysators (s. EP-A 188 639).
   Die bevorzugte Menge für Aminoalkylenacrylate I als Monomere c) beträgt 3 bis 12 Gew.-%.
   Die Reste R⁴, R⁵ und R⁶ können z.B. für Wasserstoff, Methyl, Ethyl, n-Propyl, ist-Propyl und n-Butyl stehen, wovon Wasserstoff bevorzugt wird. Als Monomer c') kommen z.B. 2-Methylvinylimidazol, 4-Methyl-vinylimidazol und 5-Methyl-vinylimidazol in Betracht, wobei der Grundkörper Vinylimidazol bevorzugt ist.
   Die Monomeren sind im Handel erhältlich oder nach bekannten Methoden herstellbar.
   Die bevorzugte Menge für Vinylimidazole II als Monomere c') beträgt 1 bis 4 Gew.-%.
   Monomer c') der allgemeinen Formel III umfaßt Aminoalkylvinylether.
   Die Reste R⁷, R⁸, R⁹, R¹⁰ und R¹¹ können gleich oder verschieden sein und für C₁-C₆-Alkyl stehen, z.B. für Methyl, Ethyl, n-Propyl, iso-Propyl und n-Butyl. R⁹, R¹⁰ und R¹¹ können auch für Wasserstoff stehen. Der C₂-C₆-Alkylenrest A² steht für geradkettige oder verzweigte Alkylenreste, beispielsweise für Ethylen, n-Propylen, Dimethylmethylen, Methylethylmethylen und Dimethylethylen. Bevorzugt sind solche Verbindungen, in denen R⁷ und R⁸ gleich sind und für C₁-C₃-Alkyl stehen, in denen A² ein geradkettiger C₂-C₄-Rest ist und R⁹, R¹⁰ und R¹¹ für Wasserstoff stehen, wie in Diethylaminoethylvinylether und Dimethylaminopropylvinylether.
   Diese Monomeren sind z.B. nach Liebigs Ann. Chem. 601 (1956) 81 erhältlich.
   Die bevorzugte Menge für Aminoalkylvinylether III als Monomere c') beträgt 0,5 bis 5 Gew.-%.
d) Als Monomer d) bzw. d') kommen Monomere in Frage, die mit den Komponenten a) bis c) bzw. a') bis c') copolymerisierbar sind und die diese ersetzen können, ohne die Eigenschaften der Copolymerisate wesentlich zu beeinflussen, z.B. Propen. Bevorzugt liegt die Menge für Monomer d) bzw. d') bei 0 bis 2 Gew.-%.

Die Herstellung der Copolymerisate erfolgt in an sich bekannter Weise durch Polymerisation der Monomeren a) bis d) bzw. a') bis d'). Dabei kommt es zu einem gegenüber Ethylen bevorzugten Einbau des Vinylimidazols II bzw. des Aminoalkylvinylethers III, so daß dessen Gehalt in den erfindungsgemäßen Copolymerisaten gegenüber der Ausgangsmonomerenmischung erhöht ist. In einer bevorzugten Ausführungsform werden die Monomeren ohne Lösungsmittel bei einem Druck von 50 bis 400 MPa, vorzugsweise 100 bis 300 MPa und einer Temperatur von 150 bis 350°C, vorzugsweise 180 bis 280°C in Gegenwart von Radikale bildenden Verbindungen polymerisiert. Die mittlere Verweilzeit beträgt im allgemeinen 60 bis 120 Sekunden. Als Radikalbildner kommen beispielsweise Peroxide wie Di-tert.-butylperoxid, tert.-Butylperoxypivalat oder tert.-Butylperoxy-3,5,5-trimethylhexanoat in Betracht, wobei deren Menge in der Regel unter 5 Gew.-%, bezogen auf die bei der Copolymerisation verwendeten Monomeren, beträgt. Um niedrigmolekulare Copolymerisate herzustellen ist es oft zweckmäßig, die Copolymerisation in Gegenwart von Reglern wie C₁-C₄-Aldehyden, z.B. Propionaldehyd, oder organischen SH-Gruppen enthaltenden Verbindungen durchzuführen, deren Menge im allgemeinen bei 0,1 bis 5 Gew.-%, bezogen auf die Summe der Monomeren, liegt. Die Polymerisation kann z.B. in einem Autoklav, einem Rohrreaktor oder einer Kombination aus Rohrreaktor und Autoklav durchgeführt werden.

Die erfindungsgemäßen Copolymerisate finden Verwendung als Zusatz für Erdölmitteldestillate, worunter Petroleum, Heizöl und Dieselkraftstoffe mit einer Siedetemperatur von etwa 150 bis 400°C verstanden werden. Die Copolymerisate können den Mitteldestillaten direkt, bevorzugt aber als 20 bis 70 gew.-%ige Lösung zugesetzt werden. Geeignete Lösungsmittel sind aliphatische oder aromatische Lösungsmittel wie Xylol oder deren Gemische, weiterhin hochsiedende Aromatengemische, sowie Mitteldestillate. Die Menge an Copolymerisaten in den Erdölmitteldestillaten beträgt in der Regel 10 bis 10 000, vorzugsweise 50 bis 5000 ppm. Je nach Verwendungszweck können die Mitteldestillate noch weitere Additive wie Fließverbesserer, Dispergatoren, Anti-Schaum-Mittel, Korrosionsschutzmittel, Antioxidantien, Leitfähigkeitsverbesserer und Farbstoffe enthalten.

Die Copolymerisate bewirken in Mitteldestillaten unabhängig von deren Herkunft eine deutliche Verbesserung der Fließeigenschaften in der Kälte. Außerdem halten sie ausgeschiedene Paraffinkristalle wirksam in der Schwebe, so daß es nicht zu Verstopfungen von Filtern und Leitungen durch abgesetztes Paraffin kommt.

### Beispiele

### 1. Allgemeine Herstellvorschrift I

Ethylen, Vinylpropionat bzw. -acetat und Dimethylaminoethylacrylat bzw. Vinylimidazol wurden unter Zusatz von Propionaldehyd als Regler in einem Autoklaven polymerisiert. Die radikalische Initiierung der Polymerisation erfolgte durch kontinuierliche Dosierung einer Isododecan-Lösung, die 0,2 Gew.-% tert.-Butylperoxypivalat und 0,5 Gew.-% tert.-Butyperoxy-3,5,5-trimethyl-hexanoat enthielt. Der Autoklav hatte ein Innenvolumen von 1 1 und ein Längen-/Durchmesser-Verhältnis von 5:1. Die mittlere Verweilzeit des Reaktionsgemischs im Autoklaven betrug etwa 90 Sekunden.

In den nachfolgenden Tabellen 1 und 2 sind die Polymerisationsbedingungen und die Mengenverhaltnisse der Monomeren zusammengestellt.

Tabelle 3 gibt die Zusammensetzung der nach obiger Vorschrift unter Mitverwendung von Vinylimidazol hergestellten Copolymerisate wieder.

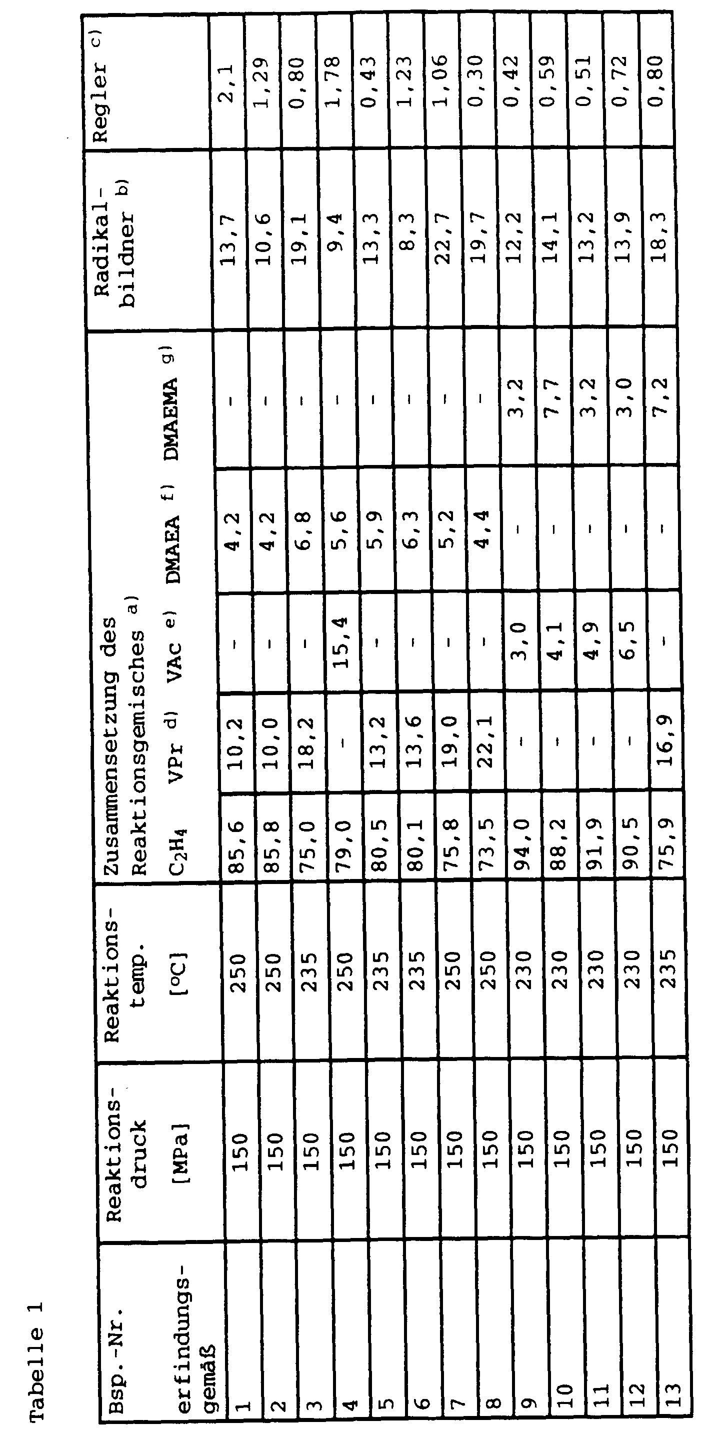

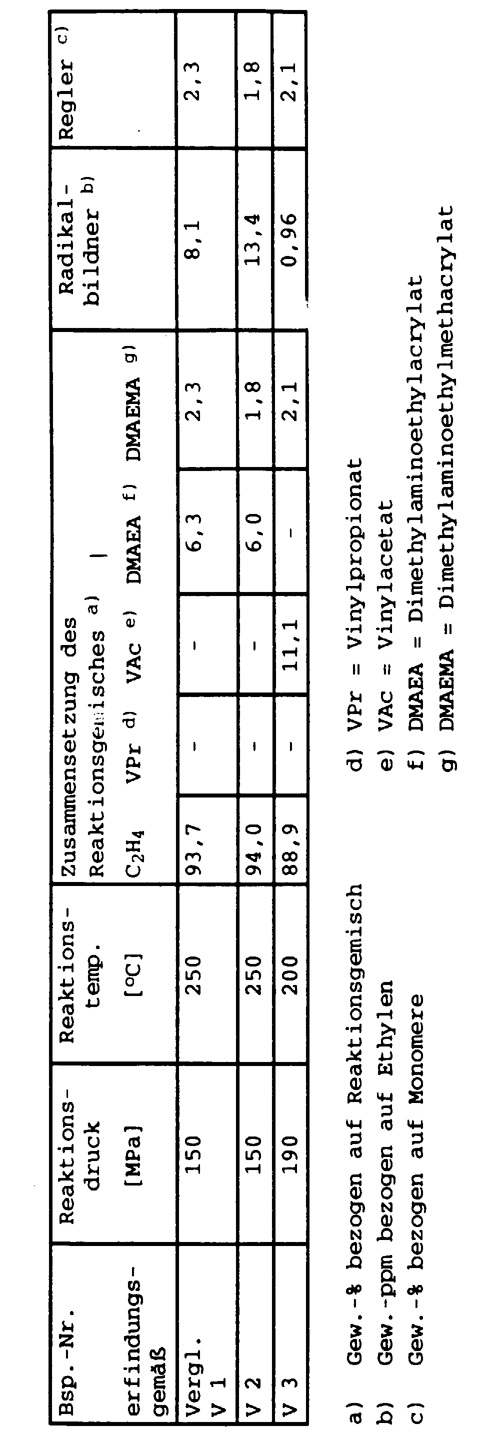

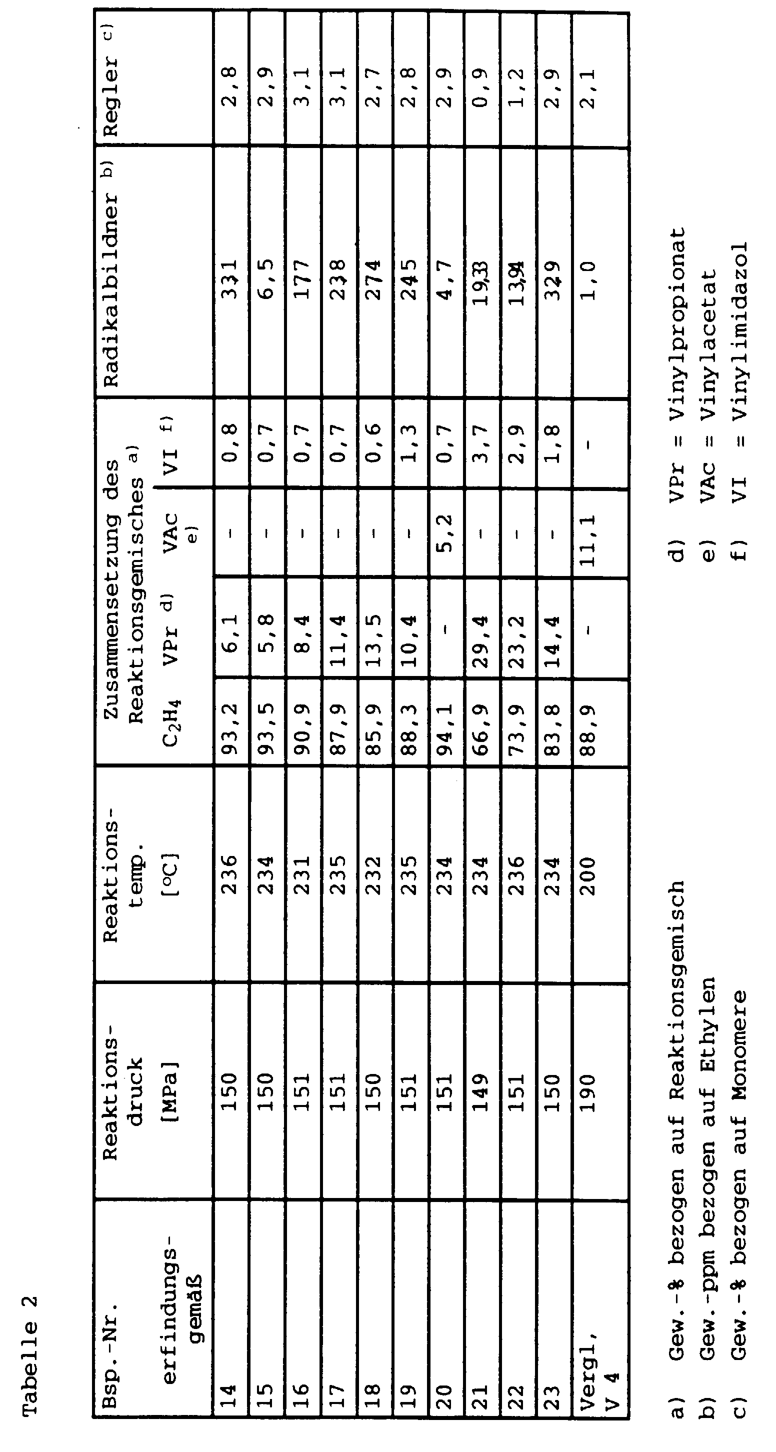

**Tabelle 3**

| Zusammensetzung der Copolymerisate | | | | | |
|---|---|---|---|---|---|
| Bsp.-Nr. erfindungsgemäß | C₂H₄ [Gew.-%] | VPr [Gew.-%] | VAc [Gew.-%] | VI[Gew.-%] | Viskosität *) [mm²/s] |
| 14 | 76,5 | 22,1 | - | 1,4 | 460 |
| 15 | 93,9 | 4,7 | - | 1,4 | 420 |
| 16 | 91,7 | 6,9 | - | 1,4 | 250 |
| 17 | 89,9 | 8,8 | - | 1,3 | 250 |
| 18 | 86,9 | 12,0 | - | 1,1 | 240 |
| 19 | 88,9 | 8,6 | - | 2,5 | 230 |
| 20 | 92,9 | - | 5,7 | 1,4 | 240 |
| 21 | 68,1 | 24.9 | - | 7,0 | 460 |
| 22 | 75,3 | 1,3 | - | 5,4 | 480 |
| 23 | 85,9 | 10,6 | - | 3,5 | 250 |
| Vergleich V 4 | 88,9 | - | 11,1 | - | 280 |

| | | | | | |
|---|---|---|---|---|---|
| *) am Rotationsviskosimeter nach DIN 53 019 bei 120°C; Vinylimidazol wird besser als Ethylen in das Copolymerisat eingbaut. | | | | | |

### 2. Allgemeine Herstellvorschrift II

Ethylen, Vinylpropionat bzw. -acetat und Diethylaminoethylvinylether wurden unter Zusatz von Propionaldehyd als Regler in einem Autoklaven polymerisiert. Die radikalische Initiierung der Polymerisation erfolgte bei 235°C und 150 MPa durch kontinuierliche Dosierung einer Isododecan-Lösung, die 0,2 Gew.-% tert.-Butylperoxypivalat und 0,5 Gew.-% tert.-Butylperoxy-3,5,5-trimethyl-hexanoat enthielt. Der Autoklav hatte ein Innenvolumen von 1 1 und ein Längen-/Durchmesser-Verhältnis von 5:1. Die mittlere Verweilzeit des Reaktionsgemischs im Autoklaven betrug etwa 90 Sekunden.

In der nachfolgenden Tabelle 4 sind die Polymerisationsbedingungen und die Mengenverhältnisse der Monomeren im Reaktionsgemisch zusammengestellt. Tabelle 5 gibt die Zusammensetzung der nach obiger Vorschrift hergestellten Copolymerisate wieder.

**Tabelle 4**

| Bsp.-Nr. erfindungsgemäß | Zusammensetzung des Reaktionsgemisches ^{a)} | | | Radikalbildner ^{b)} | Regler ^{c)} |
|---|---|---|---|---|---|
| | C₂H₄ | VPr ^{d)} | DEAEVE ^{e)} | | |
| 24 | 93,7 | 5,7 | 0,6 | 1,8 | 2,7 |
| 25 | 83,4 | 15,0 | 1,6 | 9,9 | 1,9 |
| 26 | 74,6 | 23,0 | 2,4 | 32,6 | 0,4 |
| 27 | 86,6 | 7,8 | 3,6 | 6,9 | 2,0 |
| 28 | 82,5 | 10,9 | 5,0 | 10,6 | 1,7 |
| 29 | 78,7 | 13,9 | 6,3 | 18,6 | 1,1 |
| 30 | 75,4 | 16,3 | 7,4 | 18,9 | 0,9 |
| 31 | 72,2 | 18,8 | 8,6 | 42,5 | 0,4 |
| Vergl. V 5 | 78,8 | 21,2 | - | 2,0 | 1,9 |

| | | | | | |
|---|---|---|---|---|---|
| a) Gew.-% bezogen auf Reaktionsgemisch | | | | | |
| b) Gew.-ppm bezogen auf Ethylen | | | | | |
| c) Gew.-% bezogen auf Monomere | | | | | |
| d) VPr = Vinylpropionat | | | | | |
| e) DEAEVE = Diethylaminoethylvinylether | | | | | |

**Tabelle 5**

| Zusammensetzung der Copolymerisate | | | | |
|---|---|---|---|---|
| Bsp.-Nr. erfindungsgemäß | C₂H₄ [Gew.-%] | VPr [Gew.-%] | DEAEVE [Gew.-%] | Viskosität *) [mm²/s] |
| 24 | 94,4 | 5,1 | 0,5 | 450 |
| 25 | 87,0 | 12,0 | 1,0 | 480 |
| 26 | 84,9 | 13,6 | 1,5 | 400 |
| 27 | 93,1 | 5,1 | 1,8 | 460 |
| 28 | 89,3 | 8,1 | 2,6 | 410 |
| 29 | 86,5 | 10,0 | 3,4 | 420 |
| 30 | 82,6 | 13,3 | 4,1 | 410 |
| 31 | 79,3 | 16,0 | 4,7 | 390 |
| Vergleich V 5 | 86,8 | 13,2 | - | 460 |

| | | | | |
|---|---|---|---|---|
| *) am Rotationsviskosimeter nach DIN 53 019 bei 120°C; DEAEVE wird besser als Ethylen in das Copolymerisat eingebaut. | | | | |

### 3. Verwendungsbeispiele

Die erfindungsgemäßen Copolymerisate sowie die Vergleichsverbindungen wurden in einer Reihe von Mitteldestillaten geprüft. Es handelt sich dabei um Dieselkraftstoffe in handelsüblicher deutscher Raffineriequalität; sie werden als DK 1 bis DK 7 bezeichnet:

| | DK 1 | DK 2 | DK 3 | DK 4 | DK 5 | DK 6 | DK 7 |
|---|---|---|---|---|---|---|---|
| Trübungspunkt (°C) | -8 | -7 | -4 | -7 | -8 | -7 | -7 |
| CFPP (°C) | -12 | -10 | -7 | -14 | -10 | -9 | -9 |
| Dichte b. 20°C (g/ml) | 0,831 | 0,829 | 0,832 | 0,814 | 0,831 | 0,831 | 0,826 |
| Siedeanfang (°C) | 175 | 183 | 171 | 164 | 175 | 172 | 172 |
| 20 % Siedepunkt (°C) | 223 | 211 | 220 | 206 | 223 | 216 | 217 |
| 90 % Siedepunkt (°C) | 314 | 317 | 332 | 306 | 314 | 325 | 321 |
| Siedeende (°C) | 352 | 364 | 363 | 337 | 352 | 343 | 356 |

### 3.1 Beschreibung der Testmethoden

Die Mitteldestillate wurden mit den entsprechenden Mengen der erfindungsgemäßen Beispiele 1 bis 31 bzw. den Vergleichsbeispielen V1 bis V5 (50 %-ig in Solvesso® 150, einem hochsiedenden aromatischen Kohlenwasserstoffgemisch der Firma Esso) bei 40°C unter Rühren additiviert und anschließend auf Raumtemperatur abgekühlt.

### Test 1

Die additivierten Mitteldestillate wurden in 100 ml-Messzylindern für 20 Stunden in einem Kälteschrank bei -13°C gelagert. Anschließend wurden visuell Volumen und Aussehen sowohl der sedimentierten Paraffinphase als auch der darüber stehenden Ölphase bestimmt und beurteilt. Zusätzlich wurde von jeder Probe der "Cold Filter Plugging Point" (CFPP) nach DIN EN 116 gemessen.

In den Tabellen 6 bis 14 sind die Ergebnisse aufgeführt. Es wird ersichtlich, daß die erfindungsgemäßen Copolymerisate 1 bis 31 neben einer guten CFPP-verbessernden Wirkung zusätzlich eine ausgezeichnete Wirkung als Paraffindispergatoren haben. Im Gegensatz dazu führen die comonomeren Vergleichsbeispiele V1 und V2 auf Basis Ethylen/Aminoacrylat nur zu einer unzulänglichen CFPP-Verbesserung, und das Beispiel V3 auf Basis Ethylen/Vinylpropionat ist als Paraffindispergator unwirksam. Das Vergleichsbeispiel V4 auf Basis Ethylen/Vinylacetat führt nur zu einer unzulänglichen paraffindispergierenden Wirkung. Auch das Vergleichsbeispiel V5 führt nicht zu einer ausreichenden Dispergierung der Paraffine.

**Tabelle 6**

| Dispergierversuche (Test 1) in DK 1, CP: -8°C, CFPP: -12°C | | | | | | |
|---|---|---|---|---|---|---|
| Bsp. | Dosierung (ppm) | CFPP (°C) | Paraffin-Phase | | Öl-Phase | |
| | | | (Vol-%) | Aussehen | (Vol.-%) | Aussehen |
| 1 | 300 | -24 | 95 | dispergiert | 5 | klar |
| 2 | 300 | -23 | 95 | dispergiert | 5 | klar |
| 3 | 300 | -22 | 100 | dispergiert | 0 | - |
| 4 | 300 | -24 | 90 | dispergiert | 10 | klar |
| 5 | 300 | -26 | 85 | dispergiert | 15 | klar |
| 6 | 300 | -25 | 100 | dispergiert | 0 | - |
| 7 | 300 | -29 | 90 | dispergiert | 10 | klar |
| 8 | 300 | -25 | 85 | dispergiert | 15 | klar |
| Vgl. V1 | 300 | -17 | 100 | dispergiert | 0 | - |
| V2 | 300 | -18 | 100 | dispergiert | 0 | - |
| V3 | 300 | -25 | 55 | flockig | 45 | klar |

**Tabelle 7**

| Dispergierversuche (Test 1) in DK 2, CP: -7°C, CFPP: -10°C | | | | | | |
|---|---|---|---|---|---|---|
| Bsp. | Dosierung (ppm) | CFPP (°C) | Paraffin-Phase | | Öl-Phase | |
| | | | (Vol-%) | Aussehen | (Vol.-%) | Aussehen |
| 2 | 300 | -23 | 80 | dispergiert | 20 | klar |
| 5 | 300 | -26 | 100 | dispergiert | 0 | - |
| 6 | 300 | -25 | 100 | dispergiert | 0 | - |
| 8 | 300 | -25 | 80 | dispergiert | 20 | klar |

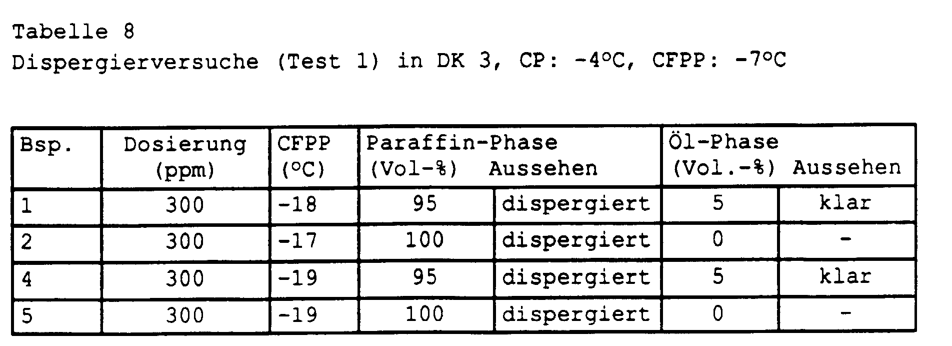

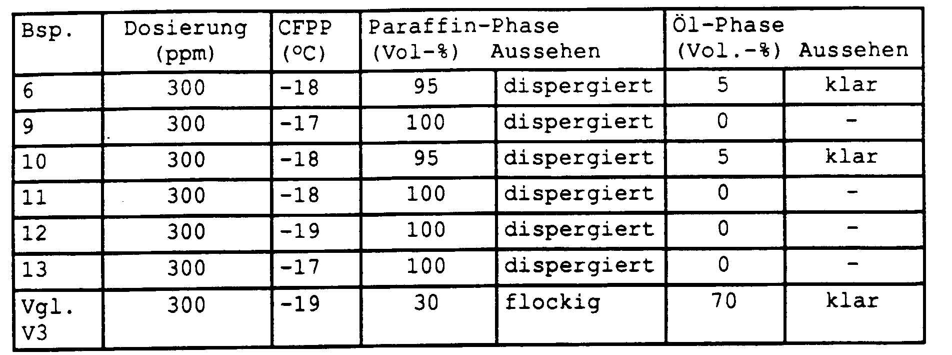

**Tabelle 9**

| Dispergierversuche im DK 5, CP: -8°C, CFPP: -10°C | | | | | | |
|---|---|---|---|---|---|---|
| Bsp. | Dosierung (ppm) | CFPP (°C) | Paraffin-phase | | Öl-Phase | |
| | | | (Vol.-%) | Aussehen | (Vol.-%) | Aussehen |
| 14 | 300 | -24 | 90 | dispergiert | 10 | klar |
| 15 | 300 | -19 | 85 | dispergiert | 15 | klar |
| 16 | 300 | -24 | 80 | dispergiert | 20 | trüb |
| 17 | 300 | -22 | 95 | dispergiert | 5 | klar |
| 18 | 300 | -25 | 70 | dispergiert | 30 | klar |
| 19 | 300 | -20 | 80 | dispergiert | 20 | trüb |
| 20 | 300 | -24 | 100 | dispergiert | 0 | - |
| Vgl. V4 | 300 | -25 | 55 | flockig | 45 | klar |

**Tabelle 10**

| Dispergierversuche im DK 6, CP: -7°C, CFPP: -9°C | | | | | | |
|---|---|---|---|---|---|---|
| Bsp. | Dosierung (ppm) | CFPP (°C) | Paraffin Phase | | Öl-Phase | |
| | | | (Vol-%) | Aussehen | (Vol.-%) | Aussehen |
| 15 | 300 | -14 | 100 | dispergiert | 0 | - |
| 16 | 300 | -13 | 100 | dispergiert | 0 | - |
| 17 | 300 | -14 | 100 | dispergiert | 0 | - |
| 18 | 300 | -14 | 100 | dispergiert | 0 | - |
| 19 | 300 | -14 | 100 | dispergiert | 0 | - |
| 20 | 300 | -13 | 100 | dispergiert | 0 | - |
| Vgl. V4 | 300 | -19 | 30 | flockig | 70 | klar |

**Tabelle 11**

| Dispergierversuche im DK 7, CP: -7°C, CFPP: -9°C | | | | | | |
|---|---|---|---|---|---|---|
| Bsp. | Dosierung (ppm) | CFPP (°C) | Paraffin Phase | | Öl-Phase | |
| | | | (Vol-%) | Aussehen | (Vol.-%) | Aussehen |
| 14 | 300 | -14 | 100 | dispergiert | 0 | - |
| 15 | 300 | -12 | 100 | dispergiert | 0 | - |
| 16 | 300 | -13 | 100 | dispergiert | 0 | - |
| 17 | 300 | -13 | 100 | dispergiert | 0 | - |
| 18 | 300 | -13 | 90 | dispergiert | 10 | klar |
| 19 | 300 | -12 | 100 | dispergiert | 0 | - |
| 20 | 300 | -13 | 100 | dispergiert | 0 | - |

**Tabelle 12**

| Dispergierversuche im DK 5, CP: -8°C, CFPP: -10°C | | | | | | |
|---|---|---|---|---|---|---|
| Bsp. | Dosierung (ppm) | CFPP (°C) | Paraffin-phase | | Öl-Phase | |
| | | | (Vol-%) | Aussehen | (Vol.-%) | Aussehen |
| 24 | 300 | -18 | 90 | dispergiert | 10 | klar |
| 27 | 300 | -20 | 97 | dispergiert | 3 | klar |
| 28 | 300 | -20 | 85 | dispergiert | 15 | klar |
| 29 | 300 | -24 | 90 | dispergiert | 10 | klar |
| 30 | 300 | -25 | 90 | dispergiert | 10 | klar |
| 31 | 300 | -26 | 95 | dispergiert | 5 | klar |
| Vgl. V5 | 300 | -25 | 55 | flockig | 45 | klar |

**Tabelle 13**

| Dispergierversuche im DK 2, CP: -7°C, CFPP: -10°C | | | | | | |
|---|---|---|---|---|---|---|
| Bsp. | Dosierung (ppm) | CFPP (°C) | Parrafin Phase | | Öl-Phase | |
| | | | (Vol-%) | Aussehen | (Vol.-%) | Aussehen |
| 25 | 300 | -20 | 70 | dispergiert | 30 | klar |
| 26 | 300 | -27 | 70 | dispergiert | 30 | klar |

**Tabelle 14**

| Dispergierversuche im DK 7, CP: -7°C, CFPP: -9°C | | | | | | |
|---|---|---|---|---|---|---|
| Bsp. | Dosierung (ppm) | CFPP (°C) | Paraffin Phase | | Öl-Phase | |
| | | | (Vol-%) | Aussehen | (Vol.-%) | Aussehen |
| 24 | 300 | -12 | 100 | dispergiert | 0 | - |
| 25 | 300 | -12 | 75 | dispergiert | 25 | klar |

### Test 2

Die additiven Mitteldestillate wurden in 500 ml-Glaszylindern in einem Kältebad von Raumtemperatur auf -18°C abgekühlt und 20 Stunden bei dieser Temperatur gelagert. Anschließend wurde visuell Menge und Aussehen der Paraffinphase bestimmt und beurteilt. Von der bei -18°C abgetrennten 20 Vol.%-Bodenphase wurde von jeder Probe der "Cold Filter Plugging Point" (CFPP) nach DIN EN 116 und der Cloud Point (CP) nach ASTM D 2500 ermittelt.

**Tabelle 15**

| Dispergierversuche (Test 2) in DK 4, CP: -7°C, CFPP: -14°C | | | | | | |
|---|---|---|---|---|---|---|
| Bsp. | Dosierung (ppm) | CFPP (°C) | Paraffin-Phase | | 20 %-Bodenphase | |
| | | | (Vol-%) | Aussehen | CFPP (°C) | CP (°C) |
| 1 | 300 | -26 | 100 | dispergiert | -25 | -11 |
| 2 | 300 | -25 | 100 | dispergiert | -24 | -10 |
| 5 | 300 | -25 | 100 | dispergiert | -25 | -13 |

Die Meßwerte in Tabelle 15 zeigen, daß die erfindungsgemäßen Copolymerisate neben einer guten CFPP-verbessernden Wirkung eine ausgezeichnete Wirkung als Paraffindispergatoren aufweisen, was sich aus der guten Übereinstimmung der Werte für CFPP (20 %-Bodenphase) mit den Gesamt-CFPP-Werten ergibt.

## Patentansprüche

1. Als Fließverbesserer für Erdölmitteldestillate geeignete Copolymerisate auf Ethylenbasis aus
a) 50 bis 94 Gew.-% Ethylen,
b) 3 bis 30 Gew.-% eines oder mehrerer Vinylester von C₂-C₆-Monocarbonsäuren,
c) 3 bis 20 Gew.-% eines oder mehrerer Aminoalkylenacrylate der allgemeinen Formel I 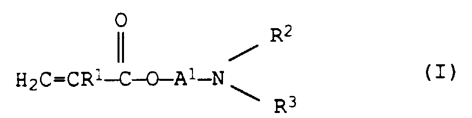 in der R¹ für Wasserstoff oder Methyl steht, die Reste R² und R³ gleich oder verschieden sein können und für Wasserstoff oder einen C₁-C₆-Alkylrest stehen und A¹ für einen geradkettigen oder verzweigten C₂-C₁₀-Alkylenrest steht, und
d) 0 bis 10 Gew.-% eines oder mehrerer Monomeren, die mit den Monomeren a) bis c) copolymerisierbar sind,
wobei solche Copolymerisate ausgeschlossen sind, in denen Monomer b) Vinylacetat ist und die ein mittleres Molekulargewicht (Zahlenmittel) von 5000 bis 50000 haben, oder aus
a') 50 bis 95,5 Gew.-% Ethylen,
b') 4 bis 30 Gew.-% eines oder mehrerer Vinylester von C₂-C₆-Monocarbonsäuren,
c') 0,5 bis 20 Gew.-% eines oder mehrerer Vinylimidazole der allgemeinen Formel II 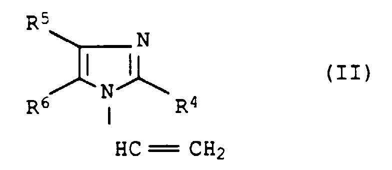 in der die Reste R⁴, R⁵ und R⁶ gleich oder verschieden sein können und für Wasserstoff oder einen C₁-C₆-Alkylrest stehen, oder
0,5 bis 20 Gew.-% eines oder mehrerer Aminoalkylvinylether der allgemeinen Formel III
R⁷R⁸N-A²-O-CR⁹=CR¹⁰R¹¹ (III)
in der die Substituenten folgende Bedeutung haben:
R⁷, R⁸, C₁-C₆-Alkyl
R⁹, R¹⁰, R¹¹ Wasserstoff oder C₁-C₆-Alkyl
A² C₂-C₆-Alkylen, und
d') 0 bis 10 Gew.-% eines oder mehrerer Monomeren, die mit den Monomeren a') bis c') copolymerisierbar sind.

2. Copolymerisate nach Anspruch 1, in denen Monomer b) oder b') Vinylacetat oder Vinylpropionat ist.

3. Copolymerisate nach Anspruch 1 oder 2, in denen das Aminoal-. kylenacrylat I Dimethylaminoethylacrylat oder Dimethylaminoethylmethacrylat ist.

4. Copolymerisate nach Anspruch 1 oder 2, bei denen die Reste R⁴ bis R⁶ des Vinylimidazols II für Wasserstoff stehen.

5. Copolymerisate nach Anspruch 1 oder 2, bei denen Diethylaminoethylvinylether als Aminoalkylvinylether III verwendet wird.

6. Verwendung von Copolymerisaten gemäß den Ansprüchen 1 bis 5 als Zusatz für Erdölmitteldestillate.

7. Verwendung nach Anspruch 6, dadurch gekennzeichnet, daß man den Erdölmitteldestillaten Copolymerisate mit einem mittleren Molekulargewicht (Gewichtsmittel) von 500 bis 5000 zusetzt.

8. Erdölmitteldestillate, enthaltend Copolymerisate gemäß den Ansprüchen 1 bis 5 in wirksamen Mengen.

## Claims

1. An ethylene-based copolymer which is suitable as a flow improver for mineral oil middle distillates and is composed of
a) from 50 to 94% by weight of ethylene,
b) from 3 to 30% by weight of one or more vinyl esters of C₂-C₆-monocarboxylic acids,
c) from 3 to 20% by weight of one or more aminoalkyl acrylates of the formula I 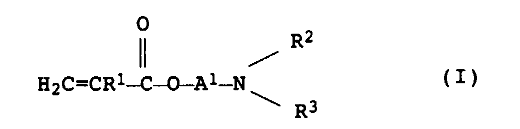 where R¹ is hydrogen or methyl, R² and R³ may be identical or different and are each hydrogen or C₁-C₆-alkyl and A¹ is straight-chain or branched C₂-C₁₀-alkylene, and
d) from 0 to 10% by weight of one or more monomers which are copolymerizable with the monomers a) to c),
copolymers in which monomer b) is vinyl acetate and which have a number average molecular weight of from 5000 to 50,000 being excluded, or are composed of
a') from 50 to 95.5% by weight of ethylene,
b') from 4 to 30% by weight of one or more vinyl esters of C₂-C₆-monocarboxylic acids,
c') from 0.5 to 20% by weight of one or more vinylimidazoles of the formula II 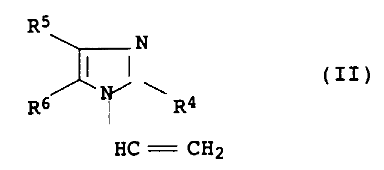 where R⁴, R⁵ and R⁶ may be identical or different and are each hydrogen or C₁-C₆-alkyl, or
from 0.5 to 20% by weight of one or more aminoalkyl vinyl ethers of the formula III
R⁷R⁸N-A²-O-CR⁹=CR¹⁰R¹¹ (III)
where
R⁷ and R⁸ are each C₁-C₆-alkyl,
R⁹, R¹⁰ and R¹¹ are each hydrogen or C₁-C₆-alkyl and
A² is C₂-C₆-alkylene, and
d') from 0 to 10% by weight of one or more monomers which are copolymerizable with the monomers a') to c').

2. A copolymer as claimed in claim 1, in which monomer b) or b') is vinyl acetate or vinyl propionate.

3. A copolymer as claimed in claim 1 or 2, in which the aminoalkyl acrylate I is dimethylaminoethyl acrylate or dimethylaminoethyl methacrylate.

4. A copolymer as claimed in claim 1 or 2, in which R⁴ to R⁶ of the vinylimidazole II are each hydrogen.

5. A copolymer as claimed in claim 1 or 2, in which diethylaminoethyl vinyl ether is used as the aminoalkyl vinyl ether III.

6. Use of a copolymer as claimed in any of claims 1 to 5 as an additive for mineral oil middle distillates.

7. Use as claimed in claim 6, wherein a copolymer having a weight average molecular weight of from 500 to 5000 is added to the mineral oil middle distillates.

8. A mineral oil middle distillate containing an effective amount of a copolymer as claimed in any of claims 1 to 5.

## Revendications

1. Copolymères à base d'éthylène, convenant comme améliorants de fluidité pour distillats moyens de pétrole brut, se composant de
a) 50 à 94% en poids d'éthylène,
b) 3 à 30% en poids d'un ou de plusieurs esters vinyliques d'acides monocarboxyliques en C₂-C₆,
c) 3 à 20% en poids d'un ou de plusieurs acrylates d'aminoalkyléne de formule générale I 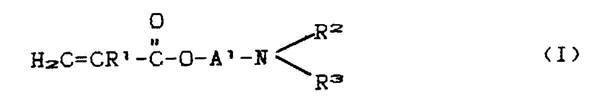 dans laquelle R' est mis pour un atome d'hydrogène ou un reste méthyle, les restes R² et R³ peuvent être identiques ou différents et sont mis chacun pour un atome d'hydrogène ou un reste alkyle en C₁-C₆, et A¹ est mis pour un reste alkyléne en C₂-C₁₀ à chaîne droite ou ramifié, et
d) 0 à 10% en poids d'un ou de plusieurs monomères qui sont copolymérisables avec les monomères a) et b),
à l'exclusion des copolymères dans lesquels le monomère b) est de l'acétate de vinyle et qui ont un poids moléculaire moyen (moyenne en nombre) de 5000 à 50 000, ou se composant de
a') 50 à 95,5% en poids d'éthylène,
b') 4 à 30% en poids d'un ou de plusieurs esters vinyliques d'acides monocarboxyliques en C₂-C₆,
c') 0,5 à 20% en poids d'un ou de plusieurs vinylimidazoles de formule générale II 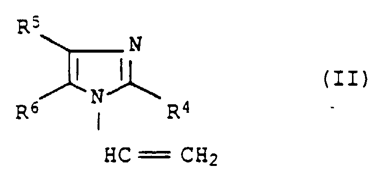 dans laquelle les restes R⁴, R⁵ et R⁶ peuvent être identiques ou différents et sont mis chacun pour un atome d'hydrogène ou un reste alkyle en C₁-C₆, ou
0,5 à 20% en poids d'un ou de plusieurs oxydes d'aminoalkyle et de vinyle de formule générale III
R⁷R⁸N-A²-O-CR⁹=CR¹⁰R¹¹ (III)
dans laquelle les substituants on les significations suivantes;
R⁷, R⁸ restes alkyle en C₁-C₆,
R⁹, R¹⁰, R¹¹ atomes d'hydrogène ou restes alkyle en C₁-C₆,
A² reste alkylène en C₂-C₆, et
d') 0 à 10% en poids d'un ou de plusieurs monomères qui sont copolymérisables avec les monomères a') à c').

2. Copolymères selon la revendication 1, dans lesquels le monomère b) ou b') est de l'acétate de vinyle ou du propionate de vinyle,

3. Copolymères selon la revendication 1 ou 2, dans lesquels l'acrylate d'alaminoalkylène I est de l'acrylate de diméthylaminoéthyle ou du méthacrylate de diméthylaminoéthyle.

4. Copolymères selon la revendication 1 ou 2, dans lesquels les restes R⁴ à R⁶ du vinylimidazole II sont mis pour des atomes d'hydrogène.

5. Copolymères selon la revendication 1 ou 2, dans lesquels de l'oxyde de diéthylaminoéthyle et de vinyle est utilisé comme oxyde d'aminoalkyle et de vinyle III.

6. Utilisation de copolymères selon l'une quelconque des revendications 1 à 5 comme additif pour des distillats moyens de pétrole.

7. Utilisation selon la revendication 6, caractérisée en ce que l'on ajoute, aux distillats moyens de pétrole, des copolymères ayant un poids moléculaire moyen (moyenne en poids) de 500 à 5000.

8. Distillats moyens de pétrole, contenant des copolymères selon l'une quelconque des revendications 1 a 5 dans des quantités efficaces.
